# EUROPÄISCHE PATENTSCHRIFT

(11) **EP 3 511 449 B1**
(45) Veröffentlichungstag und Bekanntmachung des Hinweises auf die Patenterteilung: **23.03.2022**
(21) Anmeldenummer: 18151708.7
(22) Anmeldetag: 15.01.2018
(51) Int. Cl.: D01F 2/00, C08J 11/06, D01F 13/02

(54) **WIEDERVERWENDUNG VON LYOCELL-CELLULOSE FÜR LYOCELL-VERFAHREN**
REUSE OF LYOCELL CELLULOSE FOR LYOCELL METHOD
RECYCLAGE DE LA CELLULOSE LYOCELL POUR PROCÉDÉ LYOCELL

(43) Veröffentlichungstag der Anmeldung: 17.07.2019
(73) Patentinhaber: LENZING AKTIENGESELLSCHAFT, 4860 Lenzing (AT)
(72) Erfinder: Weilach, Christian, 4840 Vöcklabruck (AT); Herchl, Richard, 4910 Ried im Innkreis (AT); Klaus-Nietrost, Christoph, 4840 Vöcklabruck (AT); Sperger, Christian, 4861 Schörfling (AT)
(74) Vertreter: Dilg, Haeusler, Schindelmann Patentanwaltsgesellschaft mbH

(56) Entgegenhaltungen:
- WO-A1-96/07778
- WO-A1-2016/123643
- WO-A1-2017/019802

## Beschreibung

Die Erfindung betrifft ein Verfahren zum Herstellen eines Cellulose aufweisenden Formkörpers und eine Verwendung.

Als Viskosefasern werden Chemiefasern bzw. Regeneratfasern bezeichnet, die mittels eines Viskoseverfahren genannten Nassspinnverfahrens hergestellt werden. Der Ausgangsrohstoff des Viskoseverfahrens ist Cellulose, die auf der Basis von Holz bereitgestellt wird. Aus diesem Ausgangsrohstoff Holz wird die hochreine Cellulose in Form von Chemiezellstoff gewonnen. In aufeinanderfolgenden Prozessstufen wird der Zellstoff zuerst mit Natronlauge behandelt, wodurch sich Alkalicellulose bildet. Bei einer anschließenden Umsetzung dieser Alkalicellulose mit Schwefelkohlenstoff bildet sich Cellulose-Xanthogenat. Daraus wird durch weitere Zugabe von Natronlauge die Viskose-Spinnlösung erzeugt, die durch Löcher brausenartiger Spinndüsen in ein Spinnbad gepumpt wird. Dort entsteht durch Koagulation pro Spinndüsenloch ein Viskose-Filament. Die so hergestellten Viskose-Filamente werden im Anschluss zu Viskose-Stapelfasern geschnitten.

Lyocell bezeichnet eine Cellulose aufweisende Regeneratfasergattung, die nach einem Direkt-Lösemittelverfahren hergestellt wird. Die Cellulose wird für das Lyocell-Verfahren aus dem Rohstoff Holz extrahiert. Der so gewonnene Zellstoff kann anschließend in N-Methylmorpholin-N-oxid (NMMO), einem Lösungsmittel, durch Wasserentzug ohne chemische Modifizierung gelöst, filtriert und anschließend durch Spinndüsen gepresst werden. Die so geformten Filamente werden nach Passieren eines Luftspaltes in einem Bad mit wässriger NMMO-Lösung ausgefällt, und anschließend zu Stapelfasern geschnitten.

Sowohl für das Lyocell-Verfahren als auch für das Viskoseverfahren wird herkömmlich üblicherweise der Rohstoff Holz eingesetzt - siehe z.B. WO96/07778.

Es ist eine Aufgabe der vorliegenden Erfindung, in ressourcensparender und nachhaltiger Weise Celluloseprodukte herzustellen.

Diese Aufgabe wird durch die Gegenstände gemäß den unabhängigen

Patentansprüchen gelöst. Bevorzugte Ausgestaltungen ergeben sich aus den abhängigen Patentansprüchen.

Gemäß einem Ausführungsbeispiel der vorliegenden Erfindung ist ein Verfahren zum Herstellen eines Cellulose aufweisenden Formkörpers geschaffen, wobei bei dem Verfahren ein mittels eines Lyocell-Verfahrens hergestellter Cellulose aufweisender Ausgangsstoff zugeführt wird, der mittels direkten Lösens (insbesondere durch Wasserentzug ohne chemische Modifizierung) einer Cellulosequelle in einem Lösungsmittel und mittels nachfolgenden Ausfällens der Cellulose durch Verdünnen der gelösten Cellulosequelle hergestellt ist, der Cellulose aufweisende Ausgangsstoff (insbesondere in einer Festkörperphase vorliegend, zum Beispiel als feste(r) Körper oder in Form von Festkörperpartikeln vorliegend) in einem Lösungsmittel direkt gelöst (insbesondere durch Wasserentzug ohne chemische Modifizierung) wird und nachfolgend zumindest ein Teil der Cellulose durch Verdünnen des gelösten Ausgangsstoffs ausgefällt wird, wodurch der Formkörper (zum Beispiel ein Vlies oder Nonwoven) erhalten wird.

Gemäß einem anderen Ausführungsbeispiel der vorliegenden Erfindung ist ein Verfahren zum Herstellen eines Cellulose-Regenerat-Formkörpers geschaffen, wobei das Verfahren ein Zuführen eines mittels eines Lyocell-Verfahrens hergestellten Cellulose aufweisenden Ausgangsstoffs, der mittels Lösens einer Cellulosequelle in einem Lösungsmittel zur Herstellung einer Spinnmasse, mittels Extrudierens der Spinnmasse und mittels nachfolgenden Ausfällens in einem Spinnbad hergestellt ist, ein Lösen des Cellulose aufweisenden Ausgangsstoffs in einem weiteren Lösungsmittel zur Herstellung einer weiteren Spinnmasse, und ein Extrudieren und nachfolgendes Ausfällen der weiteren Spinnmasse in einem weiteren Spinnbad aufweist, wodurch der Formkörper erhalten wird.

Gemäß einem anderen Ausführungsbeispiel wird ein mittels eines ersten Lyocell-Verfahrens hergestellter Cellulose aufweisender Ausgangsstoff zum Herstellen eines Cellulose aufweisenden Formkörpers mittels Behandelns des Ausgangsstoffs mittels eines zweiten Lyocell-Verfahrens verwendet.

Im Rahmen dieser Anmeldung kann unter dem Begriff "Cellulose" insbesondere eine organische Verbindung verstanden werden, die Bestandteil pflanzlicher Zellwände ist oder synthetisch hergestellt werden kann. Cellulose ist ein Polysaccharid (d.h. ein Vielfachzucker). Cellulose ist unverzweigt und weist typischerweise mehrere hundert bis zehntausende β-D-Glucose-Moleküle (β-1,4-glycosidische Bindung) bzw. Cellobiose-Einheiten auf. Aus Cellulosemolekülen werden von Pflanzen kontrolliert Cellulosefasern aufgebaut. Mit einem technischen Prozess können Cellulosemoleküle unter Bildung von Regeneratfasern zusammengelagert werden, zum Beispiel als reißfeste Fasern.

Im Rahmen dieser Anmeldung kann unter dem Begriff "Formkörper" insbesondere ein zwei- oder dreidimensionaler geometrischer Körper verstanden werden, der ein Resultat eines Verfahrens zum Herstellen bzw. Wiedergewinnen von Cellulose ist. Insbesondere kann unter einem Formkörper ein zwei- oder dreidimensionales Objekt verstanden werden, das Cellulose aufweist oder daraus besteht und aus gelöstem Zellstoff hergestellt wird. Formkörper können insbesondere Lyocell-Formkörper, Viskose-Formkörper oder Modal-Formkörper sein. Typische Formkörper sind Filamente, Fasern, Schwämme und/oder Filme. Grundsätzlich eignen sich alle Arten von Celluloseformkörpern für Ausführungsbeispiele der Erfindung. Dabei sind als Fasern sowohl Endlosfilamente als auch geschnittene Stapelfasern mit herkömmlichen Abmessungen (zum Beispiel 38 mm Länge) und Kurzfasern zu verstehen. Zur Herstellung von Fasern kommen dabei sowohl Verfahren mit Abzugseinrichtungen nach einer oder mehreren Extrusionsdüsen als auch andere Verfahren, wie insbesondere Melt-Blowing-Verfahren, in Frage. Alternativ zu Fasern kann als Formkörper auch eine Cellulose aufweisende Folie hergestellt werden, d.h. ein flächiger und im Wesentlichen homogener Film mit oder aus Cellulose. Folien können insbesondere dadurch hergestellt werden, dass durch Einstellung der Prozessparameter eines Lyocell-Verfahrens ein Koagulieren zumindest teilweise erst nach Auftreffen der Filamente auf einer Aufnahmefläche ausgelöst wird. Unter Folien können flächige Celluloseformkörper verstanden werden, wobei die Dicke dieser Folien einstellbar ist (zum Beispiel durch Auswahl einer Anzahl seriell angeordneter Düsenbalken). Andere Ausführungsformen eines Formkörpers sind ein Gewebe und ein Vlies aus Cellulosefilamenten bzw. aus Cellulosefasern, insbesondere ein Spinnvlies aus integral miteinander verschmolzenen ("merging") im Wesentlichen kontinuierlichen Cellulosefilamenten ("melt blown"). Hierbei kann unter einem Gewebe insbesondere ein textiles Flächengebilde aus mindestens zwei (vorzugsweise rechtwinklig oder nahezu rechtwinklig) verkreuzten Fadensystemen (oder Fasersystemen) verstanden werden, wobei Fäden (oder Fasern) in Längsrichtung als Kettfäden und Fäden (oder Fasern) in Querrichtung als Schussfäden bezeichnet werden können. Ein Vlies oder Nonwoven kann als ungeordnetes (insbesondere in Wirrlage vorliegendes) Gebilde aus Filamenten oder Fasern oder geschnittenen Garnen begrenzter Länge bezeichnet werden, die zu einer Faserschicht oder einem Faserflor zusammengefügt und (insbesondere reibschlüssig) miteinander verbunden sind. Ein Formkörper kann auch in der Gestalt einer Kugel geschaffen werden. Als Formkörper können auch Cellulose aufweisende Partikel, wie insbesondere Beads (d.h. ein Granulat bzw. Kügelchen) oder Flakes, bereitgestellt werden, die in dieser Form weiterverarbeitet werden können. Mögliche Celluloseformkörper sind also auch partikuläre Strukturen wie Granulat, sphärische Pulver oder Fibride. Eine Formgebung eines Formkörpers erfolgt bevorzugt durch die Extrusion einer cellulosehaltigen Spinnlösung durch eine Extrusionsdüse, da auf diese Weise große Mengen der Celluloseformkörper mit sehr einheitlicher Form hergestellt werden können. Ein weiterer möglicher Celluloseformkörper ist ein Schwamm oder allgemeiner ein poröser Formkörper. Die genannten Formkörper können gemäß exemplarischen Ausführungsbeispielen zum Beispiel zur Herstellung von Garnen, Textilien, Gelen oder Verbundwerkstoffen verwendet werden.

Im Rahmen dieser Anmeldung kann unter dem Begriff "Cellulosequelle" insbesondere ein Medium (insbesondere ein Festkörpermedium) verstanden werden, das als Basis zum Herstellen eines Cellulose aufweisenden Formkörpers während eines entsprechenden Herstellungsverfahrens das hierfür verwendete Cellulosematerial bereitstellt. Ein Beispiel ist Holz bzw. Holzzellstoff.

Im Rahmen dieser Anmeldung kann unter dem Begriff "Lyocell-Verfahren" insbesondere ein Verfahren zum Herstellen von Cellulose nach einem Direkt-Lösemittelverfahren verstanden werden. Die Cellulose kann für das Lyocell-Verfahren aus einem Ausgangsstoff gewonnen werden, der diese Cellulose enthält. Der Ausgangsstoff kann bei dem Lyocell-Verfahren in einem geeigneten Lösungsmittel (insbesondere aufweisend tertiäre Aminoxide wie zum Beispiel N-Methylmorpholin-N-oxid (NMMO) und/oder ionische Flüssigkeiten, d.h. niedrig schmelzende Salze, die aus Kationen und Anionen aufgebaut sind) gelöst werden. Das Lösen kann insbesondere durch Wasserentzug und/oder ohne chemische Modifizierung erfolgen. Die erhaltene Lösung, die auch als Dope oder Spinnlösung bezeichnet werden kann, kann bei dem Lyocell-Verfahren anschließend durch eine oder mehrere Spinndüsen gepresst werden. Dadurch gebildete Filamente können während und/oder nach ihres freien oder gesteuerten Fallens durch einen Luftspalt in einem wasserhaltigen Bad (insbesondere in einem Bad mit wässriger NMMO-Lösung) und/oder in dem Luftspalt befindliche Luftfeuchtigkeit ausgefällt werden.

Im Rahmen dieser Anmeldung kann unter dem Begriff "Viskoseverfahren" insbesondere ein Verfahren zum Herstellen von Cellulose nach einem Nassspinnverfahren verstanden werden. Die Cellulose kann für das Viskoseverfahren aus einem Ausgangsstoff (insbesondere Holz oder ein Holzzellstoff) gewonnen werden, der diese Cellulose enthält. In aufeinanderfolgenden Prozessstufen kann bei dem Viskoseverfahren der Ausgangsstoff zuerst mit einer Base (zum Beispiel mit Natronlauge) behandelt werden, wodurch sich Alkalicellulose bildet. Bei einer anschließenden Umsetzung dieser Alkalicellulose mit Schwefelkohlenstoff bildet sich Cellulose-Xanthogenat. Daraus kann durch weitere Zugabe einer Base (insbesondere von Natronlauge) eine Viskose-Spinnlösung erzeugt werden, die durch eine oder mehrere Spinndüsen gepresst werden kann. In einem Spinnbad entstehen durch Koagulation Viskose-Filamente.

Im Rahmen dieser Anmeldung kann unter dem Begriff "Reste aus einer Kleidungsherstellung" insbesondere Ausschuss und/oder Verschnitt eines Cellulose aufweisenden oder daraus bestehenden Textils oder Garnes verstanden werden, wobei diese Reste während eines Verfahrens zum Herstellen von Kleidung anfallen. Beim Herstellen von Kleidung wird zum Beispiel ein Cellulose aufweisendes Textil als Ausgangsstoff hergestellt, aus dem dann flächige Teile (zum Beispiel in Form einer T-Shirt-Hälfte) ausgeschnitten werden. Übrig bleiben Reste, die gemäß einem exemplarischen Ausführungsbeispiel wieder einem Verfahren zum Herstellen eines Cellulose aufweisenden Formkörpers zugeführt werden können. Bei Resten aus einer Kleidungsherstellung kann es sich also um einen Cellulose aufweisenden oder daraus bestehenden Ausgangsstoff handeln, der zum Wiedergewinnen von Cellulose verwendet werden kann, bevor ein Verbraucher die Reste als Kleidung oder in anderer Weise verwendet hat. Reste aus einer Kleidungsherstellung können insbesondere aus im Wesentlichen reiner Cellulose gebildet sein, insbesondere ohne separate und nicht Cellulose aufweisende Fremdkörper (wie zum Beispiel Knöpfe, Textildruck oder Nähte).

Im Rahmen dieser Anmeldung können unter dem Begriff "Altkleider" insbesondere Cellulose aufweisende Kleidungsstücke verstanden werden, die bei Rückgewinnung zumindest eines Teils der Cellulose bereits von einem Verbraucher benutzt (insbesondere getragen) worden sind. Bei Altkleidern kann es sich also um einen Cellulose aufweisenden Ausgangsstoff handeln, der erhebliche Mengen von Fremdstoffen aufweisen kann (aber nicht muss) und zum Wiedergewinnen von Cellulose verwendet werden kann, nachdem ein Verbraucher die Altkleider als Kleidung oder in anderer Weise verwendet hat. Altkleider können insbesondere aus einer Mischung aus Cellulose und einem oder mehreren Fremdstoffen gebildet sein, insbesondere aufweisend (insbesondere bei Kleidungsstücken häufig verwendeten) synthetischen Kunststoff (wie zum Beispiel Polyester und/oder Elastan) und/oder separate und nicht Cellulose aufweisende Fremdkörper (wie zum Beispiel Knöpfe, Textildruck oder Nähte). Unter Polyester werden insbesondere Polymere mit Esterfunktionen (R-[-CO-O-]-R) in ihrer Hauptkette verstanden. Zu Polyestern gehören Polycarbonate und Polyethylenterephthalat. Unter Elastan wird insbesondere eine dehnbare Chemiefaser mit hoher Elastizität verstanden. Ein Elastan zugrundeliegendes Blockcopolymer kann einen Massenanteil von mindestens 85 % Polyurethan enthalten.

Gemäß einem exemplarischen Ausführungsbeispiel der Erfindung können Cellulose-Formkörper zumindest teilweise auf der Basis eines mittels eines Lyocell-Verfahrens hergestellten Ausgangsstoffs (zum Beispiel Lyocell-Textilreste und/oder Lyocell-Alttextilien) hergestellt werden, was mit einem schnellen und einfachen Herstellungsverfahren sowie in ressourcensparender und nachhaltiger Weise erfolgen kann. Diese Vorteile beruhen insbesondere darauf, dass Lyocell-Cellulose besonders unproblematisch einem weiteren Lyocell-Verfahren zugeführt und unterzogen werden kann. Da es sich bei dem Lyocell-Verfahren um ein Direkt-Löseverfahren handelt, bei dem Cellulose direkt einem Dope zugeführt werden kann und dort ohne Weiteres in Lösung geht, kann eine aufwändige chemische Vorbehandlung des Ausgangsstoffs entbehrlich sein. Auf die beschriebene Weise kann mit Vorteil ein Lyocell-Cellulose aufweisender Ausgangsstoff für eine Wiedergewinnung bzw. ein Recycling dieser Cellulose in ein neues Lyocell-Verfahren eingeführt werden. Da überraschend während des Lyocell-Verfahrens die Cellulose keiner signifikanten Degradierung ausgesetzt ist, ist auch ein mehrfaches iteratives Rückführen von Lyocell-Cellulose in ein neuerliches Lyocell-Verfahren ohne nennenswerte Verschlechterung der Qualität der Cellulose der hergestellten Formkörper möglich. Es hat sich nämlich herausgestellt, dass bei mehreren aufeinanderfolgenden Lyocell-Verfahren unter jeweiliger Wiederverwendung von in einer jeweils vorangehenden Iteration gewonnener Lyocell-Cellulose die Grenzviskositätszahl nur sehr geringfügig vermindert wird. Dies fast nicht nennenswerte, vorteilhaft äußerst geringe Degradierung der Lyocell-Cellulose bei einer Sequenz aufeinanderfolgender Lyocell-Verfahren ist deutlich vorteilhafter als bei mehreren aufeinanderfolgenden Viskoseverfahren unter jeweiliger Wiederverwendung von zuvor erhaltener Viskose. Dort ist eine deutlich schnellere und stärkere Verringerung der Grenzviskositätszahl zu verzeichnen als bei einer Abfolge mehrerer Lyocell-Verfahren. Eine Lyocell-aus-Lyocell Architektur gemäß exemplarischen Ausführungsbeispiel ist daher noch wesentlich vorteilhafter als eine Viskose-aus-Viskose Architektur.

Im Weiteren werden zusätzliche Ausführungsbeispiele des Verfahrens und der Verwendung beschrieben.

Gemäß einem Ausführungsbeispiel kann das Verdünnen der gelösten Cellulosequelle durch ein wässriges Milieu, insbesondere aufweisend regulierbare Luftfeuchtigkeit und/oder ein Wasserbad, weiter insbesondere im Wesentlichen bestehend aus Wasser oder einer Mischung aus Wasser und Lösungsmittel (insbesondere NMMO), bewirkt werden. In entsprechender Weise kann das Verdünnen des gelösten Ausgangsstoffs durch ein wässriges Milieu, insbesondere aufweisend regulierbare Luftfeuchtigkeit und/oder ein Wasserbad, weiter insbesondere im Wesentlichen bestehend aus Wasser oder einer Mischung aus Wasser und Lösungsmittel (insbesondere NMMO), bewirkt werden. Anschaulich wird im ersten Lyocell-Verfahren bzw. im zweiten Lyocell-Verfahren durch das Wasser (insbesondere regulierbare Luftfeuchtigkeit in Kombination mit einem darunter angeordneten flüssigen Bad mit Wasser und optional einem Lösungsmittel) die Konzentration des Lösungsmittels, das die Cellulose zum Lösen gebracht hat, so stark reduziert, dass die erhaltene verdünnte Lösung unter die Löslichkeitsgrenze von Cellulose absinkt und die Cellulose dadurch ausfällt bzw. präzipitiert. Das Koagulationsmedium (d.h. insbesondere die Luftfeuchtigkeit bzw. das Wasserbad) kann im Wesentlichen reines Wasser sein oder kann mit einem Lösungsmittel versehen sein.

Gemäß einem Ausführungsbeispiel kann bei dem Verfahren der Formkörper nach Vollendung seiner Herstellung und vorzugsweise nach Benutzung dieses Formkörpers oder eines daraus hergestellten Produkts für einen vorgesehenen Zweck (zum Beispiel als Kleidungsstück) wieder in einem Lösungsmittel gelöst werden und nachfolgend zumindest ein Teil der Cellulose durch Verdünnen des gelösten Formkörpers ausgefällt werden, wodurch - mittels Durchführens eines dritten Lyocell-Verfahrens - ein anderer Formkörper erhalten wird. Mit anderen Worten kann nach dem zweiten Lyocell-Verfahren mindestens ein weiteres Lyocell-Verfahren basierend auf dem aus dem zweiten Lyocell-Verfahren erhaltenen Produkt als Ausgangsstoff für dieses dritte Lyocell-Verfahren durchgeführt werden. Es können also mindestens drei, insbesondere mindestens vier oder noch mehr Lyocell-Verfahren seriell aneinandergereiht werden, um Cellolose immer wieder von Neuem zurückzugewinnen. Dass dies möglich ist, beruht auf der nur ganz geringfügigen Degradierung der Cellulose während Durchführung eines Lyocell-Verfahrens, wobei diese Degradierung zum Beispiel deutlich geringer ist als bei mehreren seriell durchgeführten Viskoseverfahren. Dadurch kann auch für großtechnische Anwendungen eine mehrstufige Wiedergewinnung von Lyocell-Cellulose ermöglicht werden, was zu einem besonders effizienten und umweltschonenden Umgang mit Ressourcen führt. Beispielsweise können Textilien (d.h. linienförmige, flächenförmige oder räumliche Gebilde, die insbesondere auf Basis von Cellulose hergestellt sind), die Lyocell-Cellulose in Reinform oder als Mischgewebe aufweisen, auch mehr als zwei Mal einer Wiederverwertung unter Durchführung eines neuerlichen Lyocell-Verfahrens unterzogen werden. Zum Beispiel kann bei einem Lyocell-Verfahren ausgehend von einer anfänglichen Grenzviskositätszahl (die mit dem Polymerisationsgrad der Cellulose korreliert) von 400 ml/g eine lediglich geringfügige Reduktion auf etwa 390 ml/g erfolgen. Im Vergleich hierzu kann bei einem Viskoseverfahren in aufeinanderfolgenden Iterationen eine Reduktion des genannten Parameters von zum Beispiel anfänglich 550 ml/g auf 240 ml/g und in einem nächsten Durchgang auf 220 ml/g erfolgen. Dies prädestiniert das Lyocell-Verfahren in besonderer Weise für eine ressourcensparende und nachhaltige mehrfache aufeinanderfolgende Rückgewinnung von damit erzeugtem Cellulosematerial.

Gemäß einem Ausführungsbeispiel kann das Verfahren ein Zerkleinern, insbesondere ein mechanisches Zerkleinern, weiter insbesondere ein Schreddern, des Ausgangsstoffs vor dem Lösen des Ausgangsstoffs in dem Lösungsmittel aufweisen. Zum Beispiel kann durch das Zerkleinern eine Verringerung der Größe des Ausgangsstoffs auf Fasergröße erfolgen. Insbesondere ein so vorbereiteter Ausgangsstoff kann auch ohne chemische Vorbehandlung direkt in Lösung überführt werden, um eine zähviskose Spinnmasse zu erzeugen.

Gemäß einem Ausführungsbeispiel kann das Verfahren ein Lösen des Ausgangsstoffs in dem Lösungsmittel ohne chemische Vorbehandlung, insbesondere ohne chemische Reinigung und/oder ohne Einstellung der Viskosität, aufweisen. Auf diese Weise ist ein besonders effizientes Zurückgewinnen von Lyocell-Cellulose mittels eines weiteren Lyocell-Verfahrens möglich.

Gemäß einem anderen Ausführungsbeispiel kann das Verfahren ein zumindest teilweises Reinigen, insbesondere ein chemisches Reinigen, des Ausgangsstoffs vor dem Lösen des Ausgangsstoffs in dem Lösungsmittel aufweisen. Soll Cellulose besonders rein recycelt werden, so kann durch einen vorgeschalteten optionalen Reinigungsschritt der Ausgangsstoff gereinigt werden.

Zum Beispiel kann gemäß einem exemplarischen Ausführungsbeispiel das Reinigen ein zumindest teilweises Entfernen von Farbstoffen (insbesondere mittels Bleichens des Ausgangsstoffs) aus dem Ausgangsstoff vor dem Lösen des Ausgangsstoffs in dem Lösungsmittel aufweisen. Auf diese Weise kann zum Beispiel reinweißes oder zumindest helles Cellulosematerial aus dem Ausgangsstoff wiedergewonnen werden, zum Beispiel wenn intensiv gefärbter Denim-Jeansstoff wiederverwertet werden soll. Es ist alternativ aber auch möglich, wiederzuverwertende Lyocell-haltige Textilien ohne vorherige Entfärbung direkt zu lösen, ggf. nach mechanischer Zerkleinerung.

Gemäß einem Ausführungsbeispiel kann der Ausgangsstoff vor seinem Ausfällen (bevorzugt schon vor seinem Lösen) zumindest teilweise von Vernetzern befreit werden, die Fasern des Ausgangsstoffs vernetzen. Dies kann zum Beispiel mittels einer alkalischen und/oder einer sauren Vorbehandlung erfolgen, insbesondere abhängig von der Art der vorliegenden Vernetzer. Eine Lyocell Faser ist eine fibrillierende Faser, die mit Molekülen vernetzt werden kann. Ein entsprechender Vernetzer kann stören, da dieser die Lösbarkeit von Lyocell-Cellulose in Lyocell-Lösungsmittel reduzieren kann. Das zumindest teilweise Entfernen des Vernetzers im Wege einer Vorbehandlung (zum Beispiel mittels Durchführens eines alkalischen Schritts und/oder eines sauren Schritts) unter teilweiser oder vollständiger Auflösung der unerwünschten Vernetzung kann die Reinheit der erhaltenen Cellulose erhöhen.

Gemäß einem Ausführungsbeispiel kann der Ausgangsstoff ganz oder teilweise Reste aus einer Kleidungsherstellung und/oder Altkleider (zum Beispiel Mischtextilien) aufweisen. Anders ausgedrückt können als zumindest ein Teil des Ausgangsstoffs Textilien, insbesondere Reste aus einer Kleidungsherstellung und/oder Altkleider, verwendet werden. Besonders bevorzugt ist das Heranziehen von Resten aus der Kleidungsherstellung, da derartiger Verschnitt bzw. Ausschuss häufig einen sehr hohen Celluloseanteil und somit einen hohen Reinheitsgrad aufweist. Insbesondere kann ein solches Pre-Consumer-Textil frei von Fremdkörpern, wie Knöpfen, Nähten oder Textildruck sein. Zum Beispiel können Reste aus der Kleidungsherstellung im Wesentlichen gewobene (und optional gefärbte) Cellulose aufweisen, sodass solche Reste bedarfsweise auch direkt in Lösung überführt werden können, um daraus mittels des Lyocell Verfahrens Cellulose rückzugewinnen. Bei Altkleidern oder Post-Consumer-Textilien können größere Fremdkörper wie Knöpfe, Drucke und Nähte bereits beim oder nach dem mechanischen Zerkleinern abgetrennt werden. Andere Fremdstoffe der Reste oder Altkleider, wie zum Beispiel Farben und synthetische Kunststoffe (wie Polyester und Elastan), können vor dem Lösen eines entsprechenden Ausgangsstoffs zum Bilden des Dopes bzw. der Spinnlösung ganz oder teilweise entfernt werden, können aber auch ganz oder teilweise in der Spinnlösung verbleiben.

Gemäß einem Ausführungsbeispiel kann der Ausgangsstoff vor seinem Ausfällen (insbesondere vor seinem Lösen in dem Lösungsmittel) mit mindestens einem anderen Cellulose aufweisenden Ausgangsstoff vermischt werden. Beispielsweise kann der andere Ausgangsstoff zumindest ein Material aus einer Gruppe aufweisen, die besteht aus Holzzellstoff, Hadernzellstoff (insbesondere Zellstoff aus Stoffresten wie Leinen, Hadern, etc.), Textilien, Kleidung, Baumwolle (d.h. Cellulose aus einer Baumwollpflanze) und mittels eines Viskoseverfahrens hergestellte Cellulose. Es ist also auch möglich, nur einen Teil des Ausgangsstoffs für das nachfolgende Lyocell-Verfahren in Form von Lyocell-Cellulose aus einem vorangehenden Lyocell-Verfahren bereitzustellen. Der Ausgangsstoff kann auch ein inhomogenes Mischgewebe sein. Der Rest des Ausgangsstoffs, der nicht in Form von Lyocell-Cellulose zugeführt wird, kann flexibel und je nach Verfügbarkeit durch eine oder mehrere andere Cellulosequellen aufgefüllt werden. Dadurch wird der großtechnische Einsatz des Lyocell-aus-Lyocell-Verfahrens nicht durch etwaige vorübergehende Engpässe an Lyocell-Cellulose beeinträchtigt. Vielmehr ist es möglich, etwaige Fehlmengen an Lyocell-Cellulose durch andere Cellulosequellen zu kompensieren bzw. auszugleichen. Bevorzugt, da prozesstechnisch besonders unkompliziert, kann aber das Bilden des Ausgangsstoffs nur aus Lyocell-Cellulose sein.

Gemäß dem Verfahren wird das Lösen des Ausgangsstoffs und/oder das Lösen der Cellulosequelle mittels eines Direktlöseverfahrens erfolgen. Anschaulich wird die Cellulose bei einem solchen Direktlöseverfahren physikalisch in dem jeweiligen Lösungsmittel gelöst. Vorzugsweise werden hierbei als Lösungsmittel tertiäre Aminoxide eingesetzt, besonders bevorzugt N-Methylmorpholin-N-oxid (NMMO).

Gemäß einem Ausführungsbeispiel kann das Verfahren ein Nachbearbeiten der ausgefällten Cellulose zum Einstellen der Eigenschaften des Formkörpers aufweisen. Ein solches optionales Nachbearbeiten kann zum Beispiel ein Trocknen, Imprägnieren und/oder Umformen der erhaltenen Cellulose-Filamente aufweisen. Durch ein entsprechendes Nachbearbeiten ist es möglich, am Ende des Lyocell-aus-Lyocell-Verfahrens anwendungsspezifisch die Formkörperherstellung abzuschließen.

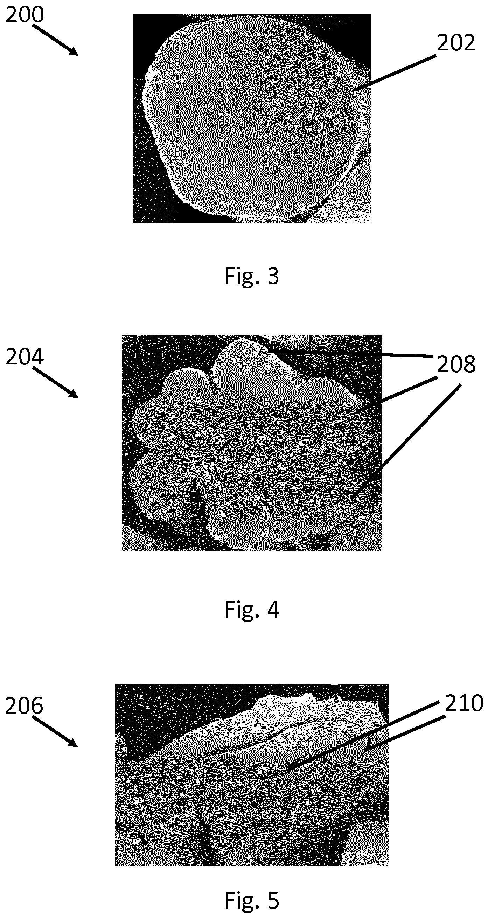

Gemäß einem Ausführungsbeispiel können Fasern des Ausgangsstoffs und/oder Fasern des Formkörpers eine glatte runde Außenfläche aufweisen. Wie in Figur 3 dargestellt, zeichnen sich mittels des Lyocell-Verfahrens extrahierte Cellulosefasern durch eine derartige Form aus und heben sich daher von anderen Faserformen ab, wie sie in natürlicher Baumwolle vorkommen oder mittels eines Viskoseverfahrens erhalten werden.

Die erfindungsgemäß hergestellten Formkörper können zum Beispiel als Verpackungsmaterial, Fasermaterial, Textilverbundstoffe, Faserverbundstoffe, Faservliese, Nadelfilze, Polsterwatte, Gewebe, Gestricke, als Heimtextilien, wie Bettwäsche, als Kleidungsstücke, als Füllstoff, Beflockungsstoff, Krankenhaustextilien, wie Unterlagen, Windel oder Matratzen, als Stoff für Wärmedecken, Schuheinlagen, sowie Wundverbände verwendet werden. Ausführungsbeispiele der Erfindung können sowohl in verschiedensten technischen Bereichen als auch in der Medizin und in Kosmetik und Wellness anwendbar sein. In der Medizin können zum Beispiel Materialien zur Wundbehandlung und Wundheilung aus einem Träger, der die mechanischen Eigenschaften bestimmt, und einem biokompatiblem Beschichtungsmaterial aufgebaut sein, das besonders verträglich mit der Haut und mit der Oberfläche der Wunde ist. Zahlreiche andere Anwendungen sind möglich.

Im Folgenden werden exemplarische Ausführungsbeispiele der vorliegenden Erfindung mit Verweis auf die folgenden Figuren detailliert beschrieben.
Figur 1 zeigt ein Flussdiagramm eines Verfahrens zum Herstellen eines Cellulose aufweisenden Formkörpers gemäß einem exemplarischen Ausführungsbeispiel der Erfindung.
Figur 2 zeigt eine Apparatur zum Herstellen eines Cellulose aufweisenden Formkörpers mittels eines Lyocell-Verfahrens auf Basis eines mittels eines Lyocell-Verfahrens hergestellten Ausgangsstoffs gemäß einem exemplarischen Ausführungsbeispiel der Erfindung.

Figur 3 zeigt eine mittels eines Lyocell-Verfahrens hergestellte Cellulosefaser.
Figur 4 zeigt eine mittels eines Viskoseverfahrens hergestellte Cellulosefaser.
Figur 5 zeigt eine natürliche Cellulosefaser aus einer Baumwollpflanze.

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Gemäß einem exemplarischen Ausführungsbeispiel der Erfindung werden Lyocell Recycling-Materialien für die Herstellung von Lyocell-Fasern verwendet. Der wesentliche Unterschied zu anderen Cellulose-haltigen Ausgangsmaterialien ist, dass Lyocell direkt (d.h. ohne chemische Vorbehandlung, vorzugsweise nach Zerkleinerung) wieder dem Dope zugeführt werden kann. Die Cellulose geht dann wieder in einem geeigneten Lösungsmittel (insbesondere NMMO) in Lösung. Dies ist nur möglich, da das Lyocell-Verfahren ein Direktlöseverfahren ist und darin keine signifikante Degradierung der Cellulose (DP-Abbau, wobei DP für den durchschnittlichen Polymerisationsgrad steht, d.h. die Anzahl der Monomereinheiten pro Makromolekül) stattfindet.

Wenn also erst einmal ein Pulp im Rahmen eines Lyocell-Verfahrens soweit konditioniert wurde (insbesondere im Sinne von: die Viskosität wurde entsprechend eingestellt), dass er für das Lyocell-Verfahren geeignet ist, so kann das aus dem Verfahren entstandene Endprodukt (Lyocell-Fasern bzw. daraus hergestellte Textilien oder andere Anwendungsprodukte) quasi in einem geschlossenen Kreislauf beliebig oft (wobei der durchschnittliche Polymerisationsgrad mit der Zeit leicht zurückgeht) wiederverwendet werden. Die Lyocell Recycling-Materialien können also an die Stelle von herkömmlichem Pulp treten.

Vorzugsweise können bei dem Verfahren Maßnahmen getroffen worden, Verunreinigungen in dem Ausgangsstoff gering zu halten oder vorab zu separieren (zur Vermeidung einer Verstopfung eines Filters einer Lyocell-Apparatur), Fremdmaterialien bei Mischungen gering zu halten oder vorab zu separieren (zur Erzielung eines hohen Reinheitsgrads der recycelten Lyocell-Cellulose), und/oder größere Partikel gering zu halten oder vorab zu separieren. Bevorzugt sind als Ausgangsstoff gemäß einem exemplarischen Ausführungsbeispiel Abfälle aus der Lyocell-Faserproduktion und Pre-consumer-Waste, insbesondere mit einer hohen Reinheit.

Mit Vorteil kann gemäß einem exemplarischen Ausführungsbeispiel der Erfindung eine Aufbereitung (zum Beispiel Reinigung, Einstellung der Viskosität) nach dem Zuführen des Ausgangsstoffs entbehrlich sein. Anschaulich kann mit einem Verfahren gemäß einem exemplarischen Ausführungsbeispiel Lyocell-Cellulose direkt wieder zu Lyocell-Cellulose verarbeitet werden. Anders ausgedrückt können mittels eines Lyocell Verfahrens hergestellte Materialien als Rohstoff für einen nachfolgenden weiteren Lyocell-Prozess verwendet werden.

Gemäß einem bevorzugten Ausführungsbeispiel der Erfindung können bei der Zellstoffgewinnung Rezyklate (insbesondere wiederverwertete Kunststoffe aus Post-Consumer-Abfällen) mit einem substanziellen Anteil von Lyocell-Fasern verwendet werden. Durch die Verwendung eines derartigen Zellstoffes für den Lyocell-Prozess werden Rezyklatprodukte möglich, welche sich in ihren technischen Eigenschaften nur geringfügig bzw. sogar nur minimal oder gar nicht von einer Lyocell-Faser unterscheiden, welche ohne Rezyklate hergestellt wurde. Insbesondere sind in dieser Ausführungsform die Weißwerte und Festigkeiten hochgradig mit der Lyocell-Faser ohne Rezyklate korreliert.

Zum Beispiel können bei dem Ausgangsstoff mindestens 3 Gewichtsprozent, insbesondere mindestens 10 Gewichtsprozent, weiter insbesondere mindestens 50 Gewichtsprozent, Lyocell-Fasern bezogen auf das Gesamtgewicht des Ausgangsstoffs vorgesehen werden.

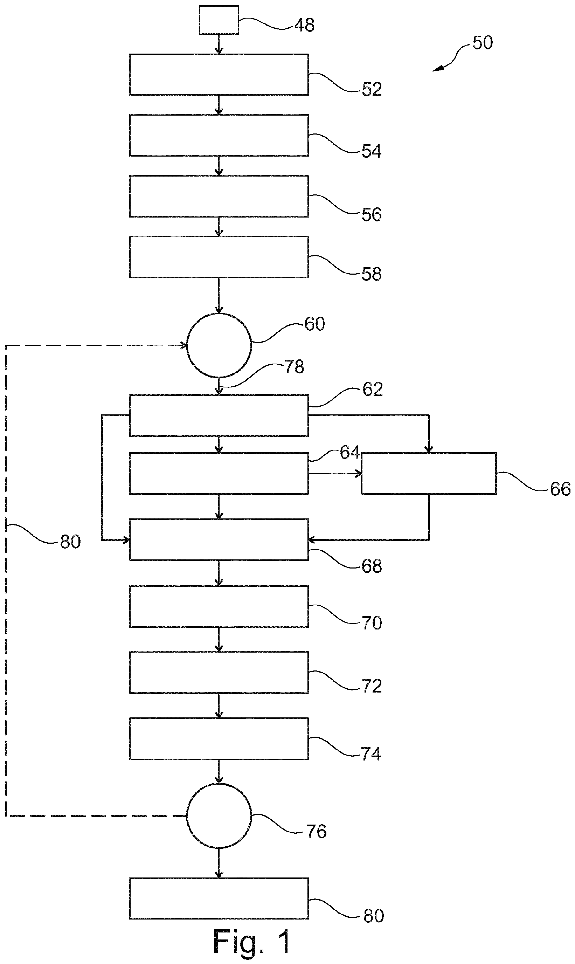

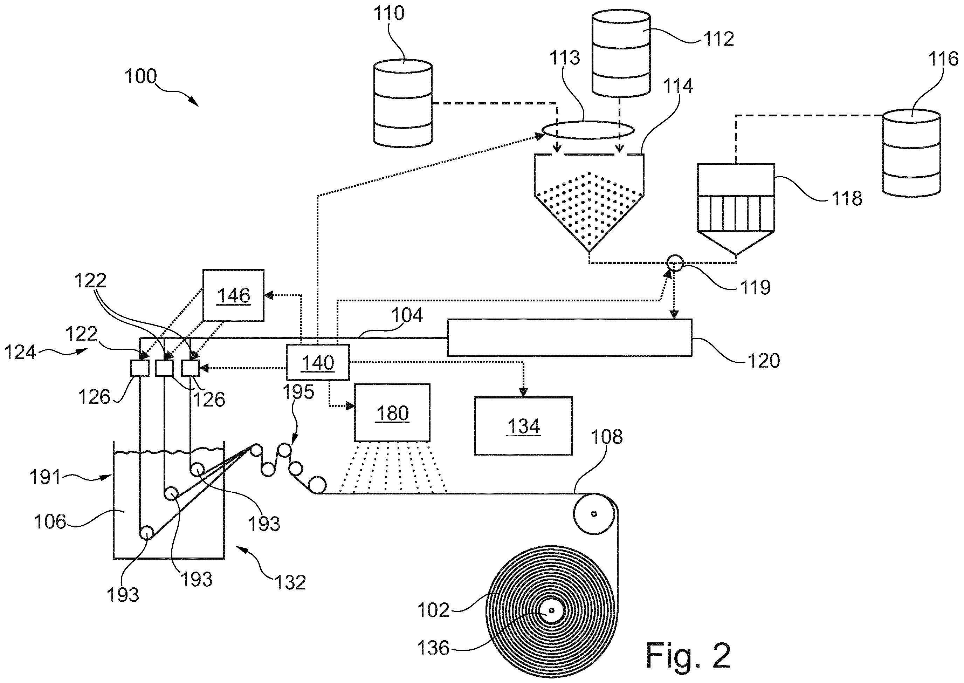

**Figur 1** zeigt ein Flussdiagramm 50 eines Verfahrens zum Herstellen eines Cellulose aufweisenden Formkörpers 102 (vergleiche Figur 2) gemäß einem exemplarischen Ausführungsbeispiel der Erfindung.

Zunächst wird bezugnehmend auf Figur 1 beschrieben, wie ein Ausgangsstoff 110 (vergleiche Figur 2) hergestellt wird, der nach Verwendung als Produkt (siehe Block 60) mittels eines Lyocell Verfahrens recycelt wird.

Zum Herstellen eines solchen Cellulose aufweisenden Ausgangsstoffs 110 wird zunächst eine Cellulosequelle 48 verwendet, d.h. ein Cellulose aufweisendes Medium. Hierbei kann es sich zum Beispiel Holzzellstoff handeln. Mittels Lösens 52 der Cellulosequelle 48 in einem geeigneten Lösungsmittel (vergleiche zum Beispiel Bezugszeichen 116 in Figur 2, zum Beispiel tertiäre Aminoxide wie zum Beispiel N-Methylmorpholin-N-oxid (NMMO); es kann für die Cellulosequelle 48 allerdings auch ein anderes Lösungsmittel verwendet werden, zum Beispiel ionische Flüssigkeiten) kann eine Lyocell-Spinnlösung bzw. Spinnmasse erzeugt werden, d.h. die Cellulose in Lösung überführt werden.

Die so hergestellte Lyocell-Spinnlösung bzw. Spinnmasse kann dann durch einen oder mehrere Filter geleitet werden (in dem zum Beispiel Fremdstoffe zurückgehalten werden können) und dann durch eine oder mehrere Spinndüsen einer Lyocell-Apparatur gepresst werden, wodurch mittels Extrudierens Cellulose aufweisenden Filamente mit noch honigzäher Konsistenz erhalten werden (siehe Block 54).

Durch Verdünnen der gelösten Cellulosequelle 48, d.h. der Lyocell-Spinnlösung nach Durchlaufen der Spinndüsen durch ein vorzugsweise wasserhaltiges oder sogar aus Wasser bestehendes Koagulationsmedium (insbesondere ein Spinnbad, wie zum Beispiel das in Figur 2 mit Bezugszeichen 191 dargestellte Spinnbad oder ein anderes Spinnbad) kann ein Koagulieren, Präzipitieren bzw. Ausfällen 56 der Cellulose aus der Lyocell-Spinnlösung ausgelöst werden. Auf diese Weise kann Cellulose, zum Beispiel in Form von Fasern, in einer festen Phase (d.h. nun als Festkörper vorliegend) hergestellt werden.

Wie mit Block 58 veranschaulicht ist, kann die so gewonnene bzw. extrahierte Cellulose einer optionalen Nachbehandlung unterzogen werden, beispielsweise einer Trocknung oder einer Veränderung der geometrischen Erscheinungsform der Cellulose (zum Beispiel durch Schneiden zu Stapelfasern).

Mit anderen Worten kann, wie mit Blöcken 48, 52, 54, 56 und 58 dargestellt ist, das beschriebene Verfahren ein Herstellen des Cellulose aufweisenden Ausgangsstoffs 110 mittels Lösens 52 der Cellulosequelle 48 in dem Lösungsmittel und nachfolgenden Ausfällens 56 der Cellulose durch Verdünnen der gelösten Cellulosequelle 48 bewerkstelligen. Anders ausgedrückt kann der Ausgangsstoff 110 mittels eines in Blöcken 48, 52, 54, 56 und 58 dargestellten Lyocell-Verfahrens hergestellt werden.

Der Ausgangsstoff 110 kann ferner weiterverarbeitet werden, zum Beispiel durch Herstellung von Kleidung auf Basis der extrahierten Cellulose. Hierbei kann die Cellulose zum Beispiel zu einem Textilgewebe weiterverarbeitet werden, insbesondere unter Verwendung weiterer Konstituenten (zum Beispiel synthetische Kunststoffe wie Polyester und Elastan). Aus dem Textilgewebe können Teile ausgeschnitten und dabei auch zusätzliche, nicht aus Cellulose bestehende Körper wie Knöpfe und Nähte zu einem Kleidungsstück (zum Beispiel einem T-Shirt) verarbeitet werden.

Wie mit Block 60 dargestellt, kann ein so hergestellter Ausgangsstoff 110 durch einen Verbraucher verwendet werden, zum Beispiel als Kleidungsstück.

Wenn der Verbraucher das Kleidungsstück entsorgt, kann dieses als Post-Consumer Ausgangsstoff 110 für ein nachfolgendes weiteres Lyocell-Verfahren verwendet werden, das im Weiteren näher beschrieben wird. Es ist alternative oder ergänzend auch möglich, einen Lyocell-Cellulose aufweisenden Pre-Consumer Ausgangsstoff 110 für ein nachfolgendes weiteres Lyocell-Verfahren zu verwenden, zum Beispiel Verschnittreste aus der Kleidungsherstellung.

Im Weiteren wird beschrieben, wie auf Basis des zumindest teilweise Lyocell-Cellulose aufweisenden Ausgangsstoffs 110 Formkörper 102 aus Lyocell-Cellulose gemäß einem Ausführungsbeispiel der Erfindung hergestellt werden können. Hierfür wird der Ausgangsstoff 110 einer Apparatur 100 (siehe Figur 2) zum Durchführen eines Lyocell-Verfahrens zugeführt, vergleiche Bezugszeichen 78.

Dort kann zunächst ein mechanisches Zerkleinern 62 des Ausgangsstoffs 110 durch Schreddern erfolgen. Dadurch können vor allem große nichtcellulosische Störstoffe aus dem Ausgangsstoff 110 entfernt werden, beispielsweise Knöpfe, Nähte und Drucke der Altkleider, die zum Erzeugen des Ausgangsstoffs 110 zumindest teilweise verwendet worden sind. Durch das mechanische Zerkleinern 62 kann zum Beispiel der Ausgangsstoff 110 in Einzelfasern zertrennt werden.

Es ist auch möglich (siehe Block 64), den Lyocell-Cellulose aufweisenden Ausgangsstoff 110 mit anderen Cellulose aufweisenden Materialien gemeinsam für das nachfolgende Lyocell-Verfahren einzusetzen. Somit kann der Ausgangsstoff 110 mit einem anderen Cellulose aufweisenden Ausgangsstoff vermischt werden, siehe Block 64. So kann der Ausgangsstoff 110 alternativ oder ergänzend zum Beispiel auch Reste aus einer Kleidungsherstellung aufweisen. Ferner ist es optional möglich, dem Ausgangsstoff auch ein anderes Cellulose aufweisendes Material beizufügen, wie zum Beispiel Holzzellstoff. Es ist also möglich, den gemäß dem ersten und oben beschriebenen Lyocell-Verfahren gewonnenen Ausgangsstoff 110 mit einem weiteren Cellulose aufweisenden Nicht-Lyocell Ausgangsstoff zu vermischen. Letzterer kann zum Beispiel Hadernzellstoff aus Textilien, Baumwolle aus einer Baumwollpflanze, aus einem Viskoseverfahren gewonnene Cellulose und/oder Cotton Linters (d.h. gegenüber den zum Beispiel ungefähr 38 mm langen Cotton Lint wesentlich kürzere Baumwollstränge, wie sie am Samen einer Baumwollpflanze wachsen) aufweisen. Der Anteil von mittels des Lyocell-Verfahrens gewonnener Cellulose an dem Ausgangsstoff 110 kann zum Beispiel zwischen 3 Gewichtsprozent und 100 Gewichtsprozent sein, insbesondere zwischen 10 Gewichtsprozent und 80 Gewichtsprozent. Besonders bevorzugt ist es, wenn dieser Anteil 100 Gewichtsprozent beträgt (wobei dem Fachmann geläufig ist, dass ein geringer Fremdstoffanteil immer vorliegen kann).

Unmittelbar nach dem mechanischen Zerkleinern 62 bzw. unmittelbar nach dem Mischen 64 kann ein direktes Lösen des (reinen bzw. gemischten) Ausgangsstoffs 110 in einem weiteren Lösungsmittel 116 (zum Beispiel tertiäre Aminoxide wie zum Beispiel N-Methylmorpholin-N-oxid (NMMO)) vorteilhaft ohne chemische Vorbehandlung erfolgen, wodurch eine Spinnmasse erhalten wird. Genauer gesagt kann der mechanisch zerkleinerte (und optional gemischte) Ausgangsstoff 110 insbesondere ohne chemische Reinigung und ohne Einstellung der Viskosität direkt in Lösung übergeführt werden. Auf diese Weise kann das Herstellungs- bzw. Recyclingverfahren außergewöhnlich einfach und schnell sowie umweltfreundlich durchgeführt werden.

Alternativ kann das Verfahren nach dem mechanischen Zerkleinern 62 (oder nach dem Mischen 64) und vor dem Lösen 68 ein optionales chemisches Reinigen 66 des Ausgangsstoffs 110 aufweisen. Ein solches optionales Reinigen 66 kann zum Beispiel ein zumindest teilweises Entfernen von Farbstoffen durch Bleichen aufweisen. Dadurch ist es möglich, den Ausgangsstoff 110 vor einem nachfolgenden Lösen 68 des Ausgangsstoffs 110 in Lösungsmittel 116 ganz oder teilweise zu entfärben, beispielsweise um weiße oder graue Formkörper 102 herzustellen. Es ist alternativ oder ergänzend auch möglich, dass im Rahmen des optionalen chemischen Reinigens 66 der Ausgangsstoff 110 (vor oder nach seinem Lösen 68) zumindest teilweise von Fasern des Ausgangsstoffs 110 vernetzenden Vernetzern befreit wird. In Anwendungen, in denen solche Vernetzer zwischen den Fasern des Ausgangsstoffs 110 vorliegen, kann der Ausgangsstoff 110 zum Beispiel mittels einer alkalischen oder einer sauren Vorbehandlung von diesen Vernetzern ganz oder teilweise befreit werden. Dies verbessert die Lösbarkeit des Ausgangsstoffs 110 zusätzlich.

Nach dem Lösen 68 des Ausgangsstoffs 110 in Lösungsmittel (bevorzugt NMMO) kann die erhaltene Lyocell-Spinnlösung bzw. Spinnmasse durch eine oder mehrere Spinndüsen gepresst werden, wodurch mittels Extrudierens Fäden bzw. Filamente honigzäher Viskosität entstehen (siehe Block 70, der dieses Spinnen betrifft).

Während und/oder nach dem Fallen dieser Fäden bzw. Filamente werden diese in Wirkverbindung mit einem wässrigen Milieu gebracht und dadurch verdünnt. Die Konzentration des Lösungsmittels 116 der Fäden bzw. Filamente wird dadurch zum Beispiel in einem wässrigen Flüssigkeitsbad als Spinnbad so weit reduziert, dass die Lyocell-Spinnlösung in eine feste Phase aus Cellulose-Filamenten überführt wird. Anders ausgedrückt kommt es zu einem Präzipitieren, Fällen oder Koagulieren der Cellulose-Filamente, siehe Bezugszeichen 72. Dadurch wird der Formkörper 102 bzw. eine Vorform für eine Stapelfaser erhalten.

Das Lösen 68, Spinnen 70 und nachfolgende Ausfällen 72 mittels eines Lyocell-Verfahrens wird also basierend auf einem Ausgangsstoff 110 durchgeführt, der seinerseits mittels eines vorangehenden Lyocell-Verfahrens hergestelltes Cellulosematerial aufweist oder daraus besteht. Anschaulich kann das beschriebene Herstellungsverfahren daher als Lyocell-mit-Lyocell-Verfahren bezeichnet werden. Anders ausgedrückt kann ein mittels eines ersten Lyocell-Verfahrens hergestellter Cellulose aufweisender Ausgangsstoff 110 zum Herstellen eines Cellulose aufweisenden Formkörpers 102 mittels Behandelns des Ausgangsstoffs 110 mittels eines zweiten Lyocell-Verfahrens verwendet werden.

Ferner kann das Verfahren ein Nachbearbeiten 74 der ausgefällten Lyocell-Cellulose zum Beeinflussen der Eigenschaften des Formkörpers 102 aufweisen. Eine solche Nachbearbeitung kann zum Beispiel ein Trocknen, Imprägnieren und/oder Umformen der erhaltenen Filamente zu dem finalen Formkörper 102 umfassen. Zum Beispiel kann der Formkörper 102 durch das beschriebene Herstellungsverfahren zu Fasern, einer Folie, einem Gewebe, einem Vlies, einer Kugel, einem porösen Schwamm oder Beads verarbeitet werden und dann einer weiteren Nutzung zugeführt werden (vergleiche Bezugszeichen 76).

Mit Vorteil kann nach Nutzung des Formkörpers 102 dessen Lyocell-Cellulose von Neuem wiedergewonnen werden, indem ein weiteres Lyocell-Verfahren entsprechend der Verfahrensschritte zwischen Bezugszeichen 78 und 74 durchgeführt wird (siehe Block 80). Diese mehrfache Wiederholbarkeit des Lyocell-Recyclings mittels wiederholter Lyocell-Verfahrensstufen wird durch die Erkenntnis ermöglicht, dass die Degradierung bzw. DP-Verringerung von Lyocell-Cellulose durch abermalige Wiederholungen von Lyocell-Verfahren überraschend gering ist.

**Figur 2** zeigt eine Apparatur 100 zum Herstellen eines Cellulose aufweisenden Formkörpers 102 mittels eines Lyocell-Verfahrens auf Basis eines mittels eines vorangehenden Lyocell-Verfahrens hergestellten Ausgangsstoffs 110 gemäß einem exemplarischen Ausführungsbeispiel der Erfindung, das bezugnehmend auf Figur 1 beschrieben wurde.

Figur 2 zeigt also eine Apparatur 100 gemäß einem exemplarischen Ausführungsbeispiel der Erfindung zum Herstellen eines Cellulose aufweisenden Formkörpers 102, der zum Beispiel in Form eines Vlieses (Nonwoven), als Faser, Folie, Kugel, Textilgewebe, Schwamm oder in Form von Beads oder Flakes hergestellt werden kann. Gemäß Figur 2 wird der Formkörper 102 direkt aus einer Spinnlösung 104 hergestellt. Letztere wird mittels eines Koagulations-Fluids 106 (insbesondere aus Luftfeuchtigkeit) und/oder eines Koagulations-Bads 191 (beispielsweise ein Wasserbad, das optional tertiäre Aminoxide wie zum Beispiel N-Methylmorpholin-N-oxid (NMMO) aufweist) in Cellulosefasern 108 als Formkörper 102 umgewandelt. Mittels der Apparatur 100 kann ein Lyocell-Verfahren ausgeführt werden. Auf diese Weise können als Formkörper 102 zum Beispiel im Wesentlichen endlose Filamente oder Fasern 108 oder Mischungen im Wesentlichen endloser Filamente und Fasern 108 diskreter Länge hergestellt werden. Eine Mehrzahl von Düsen, die jeweils eine oder mehrere Öffnungen 126 (die auch als Spinnlöcher bezeichnet werden können) haben, sind bereitgestellt, um Lyocell-Spinnlösung 104 auszustoßen.

Wie Figur 2 entnommen werden kann, kann einem Speichertank 114 über eine Dosiereinrichtung 113 ein Cellulose basierter Ausgangsstoff 110 zugeführt werden.

Gemäß einem Ausführungsbeispiel kann ein Wassereintrag in den Cellulose basierten Ausgangsstoff 110 durch ein unten näher beschriebenes Lösungsmittel 116 (insbesondere NMMO) erfolgen. Auch kann der Cellulose basierte Ausgangsstoff 110 selbst bereits eine gewisse Restfeuchte enthalten (trockener Zellstoff zum Beispiel hat häufig eine Restfeuchte von 5 Gewichtsprozent bis 8 Gewichtsprozent). Insbesondere kann gemäß dem beschriebenen Ausführungsbeispiel der Ausgangsstoff 110 ohne Vorbefeuchtung direkt in eine Mischung aus Wasser und Lösungsmittel 116 gegeben werden. Ein in Figur 2 gezeigter optionaler Wasserbehälter 112 kann dann weggelassen werden.

Gemäß einem alternativen Ausführungsbeispiel kann der Cellulose aufweisende Ausgangsstoff 110 zusätzlich angefeuchtet werden, um dadurch feuchte Cellulose bereitzustellen. Zu diesem Zweck kann Wasser aus einem optionalen Wasserbehälter 112 dem Speichertank 114 über die Dosiereinrichtung 113 zugeführt werden. Daher kann die Dosiereinrichtung 113, gesteuert mittels einer Steuereinrichtung 140, dem Speichertank 114 einstellbare relative Mengen von Wasser und Ausgangsstoff 110 zuführen.

Ein geeignetes Lösungsmittel 116, bevorzugt tertiäre Aminoxide wie zum Beispiel N-Methylmorpholin-N-oxid (NMMO), beziehungsweise eine wässrige Mischung des Lösungsmittels 116, zum Beispiel eine 76%ige Lösung von NMMO in Wasser, ist in einem Lösungsmittelbehälter enthalten. Die Konzentration des Lösungsmittels 116 kann in einer Konzentriereinrichtung 118 entweder durch Zugabe von reinem Lösemittel oder Wasser eingestellt werden. Das Lösungsmittel 116 kann dann mit dem Ausgangsstoff 110 mit definierbaren relativen Mengen in einer Mischeinheit 119 gemischt werden. Auch die Mischeinheit 119 kann mittels der Steuereinheit 140 gesteuert werden. Dadurch wird der Cellulose aufweisende Ausgangsstoff 110 in dem konzentrierten Lösungsmittel 116 in einer Löseeinrichtung 120 mit einstellbaren relativen Mengen gelöst, wodurch die Lyocell-Spinnlösung 104 erhalten wird.. Die relativen Konzentrationsbereiche (auch als Spinnfenster bezeichnet) der Komponenten Ausgangsstoff 110, Wasser und Lösungsmittel 116 in der Spinnlösung 104 zur Herstellung von cellulosischen Regeneratformkörpern nach dem Lyocell-Verfahren können, wie einem Fachmann bekannt, geeignet eingestellt werden.

Die Lyocell-Spinnlösung 104 wird einer Fasererzeugungseinrichtung 124 zugeführt (die mit einer Anzahl von Spinnbalken oder Jets 122 ausgebildet sein kann).

Wenn die Lyocell-Spinnlösung 104 durch die Öffnungen 126 der Jets 122 geführt wird, wird sie in eine Mehrzahl von parallelen Fäden aus Lyocell-Spinnlösung 104 aufgeteilt. Die beschriebene Prozessführung transformiert die Lyocell-Spinnlösung 104 in zunehmend lange und dünne Fäden, deren Eigenschaften durch entsprechende Einstellung der Prozessbedingungen, gesteuert durch die Steuereinheit 140, eingestellt werden können. Optional kann ein Gasfluss die Lyocell-Spinnlösung 104 auf ihrem Weg von den Öffnungen 126 zu einer Faseraufnahmeeinheit 132 beschleunigen.

Nachdem die Lyocell-Spinnlösung 104 sich durch die Jets 122 und weiter abwärts bewegt hat, interagieren die langen und dünnen Fäden der Lyocell-Spinlösung 104 mit dem Koagulations-Fluid 106.

Bei der Wechselwirkung mit dem Koagulations-Fluid 106 (zum Beispiel Wasser) wird die Lösungsmittelkonzentration der Lyocell-Spinnlösung 104 reduziert, sodass die Cellulose des Ausgangsstoffs 110 zumindest teilweise als lange und dünne Cellulosefasern 108 (die immer noch Reste von Lösungsmittel und Wasser enthalten können) koaguliert bzw. ausfällt.

Während oder nach der initialen Bildung der individuellen Cellulosefasern 108 aus der extrudierten Lyocell-Spinnlösung 104 werden die Cellulosefasern 108 an der Faseraufnahmeeinheit 132 aufgenommen. Die Cellulosefasern 108 können in das in Figur 2 dargestellte Koagulations-Bad 191 (zum Beispiel ein Wasserbad, optional aufweisend ein Lösungsmittel wie NMMO) eintauchen und können bei Wechselwirkung mit der Flüssigkeit des Koagulations-Bads 191 ihr Ausfällen abschließen. Abhängig von der Prozesseinstellung der Koagulation kann die Cellulose Cellulosefasern 108 bilden (wie gezeigt, wobei die Cellulosefasern 108 einstoffig bzw. integral miteinander verschmolzen ("merging") sein können oder als getrennte Cellulosefasern 108 vorliegen können) oder kann sich an der Faseraufnahmeeinheit 132 eine Folie bzw. ein Film aus Cellulose bilden (nicht in Figur 2 dargestellt).

Die Cellulosefasern 108 werden also aus den Spinndüsen der Jets 122 extrudiert und durch das Spinnbad bzw. Koagulations-Bad 191 (enthaltend zum Beispiel Wasser und NMMO in niedriger Konzentration zur Ausfällung/Koagulation) geführt, dabei werden die Cellulosefasern 108 um eine jeweilige Umlenkrolle 193 im Koagulations-Bad 191 geführt und außerhalb des Koagulations-Bads 191 einer Abzugsgalette 195 zugeführt. Die Abzugsgalette 195 sorgt für Weitertransport und Nachverstreckung der Cellulosefasern 108, um einen gewünschten Titer zu erreichen. Nach der Abzugsgalette 195 wird das Faserbündel aus den Cellulosefasern 108 in einer Wascheinheit 180 gewaschen, gegebenenfalls aviviert und schließlich geschnitten (nicht gezeigt).

Obwohl dies in Figur 2 nicht dargestellt ist, kann Lösungsmittel 116 der Lyocell-Spinnlösung 104, das aus den Cellulosefasern 108 beim Koagulieren und bei einem nachfolgenden Waschen in der Wascheinheit 180 entfernt worden ist, zumindest teilweise zurückgewonnen bzw. recycelt werden und in einem nachfolgenden Zyklus wieder in den Speichertank 114 übergeführt werden. Während des Transports entlang der Faseraufnahmeeinheit 132 kann der Formkörper 102 (hier in Form der Cellulosefasern 108) mittels der Wascheinheit 180 gewaschen werden, indem Letztere eine Waschflüssigkeit zum Entfernen von Lösungsmittelresten zuführt. Danach kann der Formkörper 102 getrocknet werden.

Der Formkörper 102 kann darüber hinaus einer Nachbehandlung unterzogen werden, siehe die schematisch dargestellte Nachbehandlungseinheit 134. Zum Beispiel kann eine solche Nachbehandlung eine Hydroverschlingung, eine Nadelbehandlung, eine Imprägnierung, eine Dampfbehandlung mit einem unter Druck zugeführten Dampf und/oder ein Kalandrieren, etc., aufweisen.

Die Faseraufnahmeeinheit 132 kann den Formkörper 102 einer Aufwickeleinrichtung 136 zuführen, an welcher der Formkörper 102 aufgewickelt werden kann. Der Formkörper 102 kann dann als Rollgut einer Entität zugeführt werden, die Produkte wie zum Beispiel Wischtücher oder Textilien auf Basis des Formkörpers 102 herstellt.

Um mittels der Apparatur 100 gemäß Figur 2 ein Verfahren gemäß einem exemplarischen Ausführungsbeispiel der Erfindung gemäß Figur 1 durchführen zu können, wird als Ausgangsstoff 110 ganz oder teilweise Material zugeführt, das aus einem vorangehenden Lyocell-Verfahren (ebenfalls durchführbar mit einer Apparatur 100 gemäß Figur 2) gewonnen wurde.

Im Weiteren werden Beispiele für eine Verfahrensführung gemäß exemplarischen Ausführungsformen der Erfindung beschrieben:

### Beispiel 1:

In einer beispielhaften Anwendung des Verfahrens gemäß einer Ausführungsform der Erfindung wurden auf einer Laboranlage nach dem Lyocell-Verfahren hergestellte Cellulosefasern als Ausgangsstoff zur Durchführung eines weiteren Lyocell-Verfahrens eingesetzt. Konkret wurden Lyocell Kurzschnittfasern mit einer Faserlänge von 3 mm eingesetzt. Dieser Ausgangsstoff wurde ohne weitere Vorbehandlung mit einer wässrigen NMMO Lösung vermischt, um daraus eine spinnfähige Lösung herzustellen. Diese Spinnlösung wurde anschließend in Form von Filamenten regeneriert und zu Stapelfasern mit einem Titer von 1,3 dtex und einer Länge von 38 mm geschnitten. Bei der Charakterisierung der so erhaltenen Fasern zeigte sich, dass die erhaltenen Eigenschaften (insbesondere Faserfestigkeit (FFk) und Dehnung (FDk)) im Wesentlichen vergleichbar sind mit solchen Lyocellfasern, die auf der gleichen Laboranlage mit typischem Chemiezellstoff als Ausgangsstoff erzielt werden können (vgl. Tabelle 1).

### Beispiel 2:

Die Lyocell Kurzschnittfasern aus Beispiel 1 wurden, ohne weitere Vorbehandlung, mit lyocelltauglichem Chemiezellstoff als weiterer Ausgangsstoff vermischt. Die Gesamtmenge der vermischten Ausgangsstoffe bestand in diesem Beispiel aus 20 Gewichtsprozent der Lyocell Kurzschnittfasern und 80 Gewichtsprozent des Chemiezellstoffes. Aus den vermischten Ausgangsstoffen wurde dann in einem anschließenden Lyocell-Verfahren mit NMMO eine Spinnlösung hergestellt und daraus Stapelfasern hergestellt. Wie in Beispiel 1 wurde gefunden, dass die Eigenschaften der so hergestellten Lyocell-Fasern im Wesentlichen mit jenen übereinstimmen, die auf der gleichen Laboranlage mit Chemiezellstoff als alleinigem Ausgangsstoff hergestellt werden können (vgl. Tabelle 1).

**Tabelle 1: Fasereigenschaften**

| Beispiel | Anteil Lyocell Ausgangsstoff | Anteil Chemiezellstoff | Titer | Festigkeit | Dehnung |
|---|---|---|---|---|---|
| | Gewichtsprozent | Gewichtsprozent | dtex | cN/tex | % |
| Beispiel 1 | 100 | 0 | 1,25 | 34,2 | 10,7 |
| Beispiel 2 | 20 | 80 | 1,32 | 33,9 | 12,1 |
| Referenz | 0 | 100 | 1,26 | 33,5 | 11,8 |

**Figur 3** zeigt eine mittels eines Lyocell-Verfahrens hergestellte Cellulosefaser 200 im Querschnitt. Die mittels eines Lyocell-Verfahrens hergestellte Cellulosefaser 200 hat eine glatte runde Außenfläche 202 und ist homogen und frei von makroskopischen Löchern mit Cellulosematerial ausgefüllt. Sie kann daher von einem Fachmann eindeutig von mittels eines Viskoseverfahrens hergestellten Cellulosefasern (siehe Bezugszeichen 204 in Figur 4) und von Cellulosefasern aus Baumwollpflanzen (siehe Bezugszeichen 206 in Figur 5) unterschieden werden.

**Figur 4** zeigt eine mittels eines Viskoseverfahrens hergestellte Cellulosefaser 204 im Querschnitt. Die Cellulosefaser 204 ist wolkenförmig und weist entlang ihres äußeren Umfangs eine Mehrzahl von bogenförmigen Strukturen 208 auf.

**Figur 5** zeigt eine natürliche Cellulosefaser 206 aus einer Baumwollpflanze im Querschnitt. Die Cellulosefaser 206 ist nierenförmig und weist im Inneren ein materialfreies Lumen 210 als vollumfänglich umschlossenen Hohlraum auf.

Anhand der signifikanten geometrischen bzw. strukturellen Unterschiede der Fasern gemäß Figur 3 bis Figur 5 ist es einem Fachmann möglich, zum Beispiel unter einem Mikroskop unzweideutig zu ermitteln, ob eine Cellulosefaser mittels des Lyocell-Verfahrens, mittels des Viskoseverfahrens oder natürlich in einer Baumwollpflanze gebildet worden ist.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Herstellen eines Cellulose-Regenerat-Formkörpers (102), wobei das Verfahren aufweist:
Zuführen (78) eines mittels eines Lyocell-Verfahrens hergestellten Cellulose aufweisenden Ausgangsstoffs (110), der mittels Lösens (52) einer Cellulosequelle (48) in einem Lösungsmittel zur Herstellung einer Spinnmasse, mittels Extrudierens (54) der Spinnmasse und mittels nachfolgenden Ausfällens (56) in einem Spinnbad hergestellt ist;
Lösen (68) des Cellulose aufweisenden Ausgangsstoffs (110) in einem Lösungsmittel (116) zur Herstellung einer Spinnmasse, wobei das Lösen (68) des Ausgangsstoffs (110) mittels eines Direktlöseverfahrens erfolgt; und
Extrudieren (70) und nachfolgendes Ausfällen (72) der Spinnmasse in einem Spinnbad (191), wodurch der Formkörper (102) erhalten wird.

2. Verfahren gemäß Anspruch 1, wobei das Spinnbad (191) für den gelösten Cellulose aufweisenden Ausgangsstoff (110) Wasser und Lösungsmittel aufweist.

3. Verfahren gemäß Anspruch 1 oder 2, wobei das Spinnbad für die gelöste Cellulosequelle (48) Wasser und Lösungsmittel aufweist.

4. Verfahren gemäß einem der Ansprüche 1 bis 3, wobei der Formkörper (102) ein Filament, eine Faser, insbesondere eine Endlosfaser, eine Folie, ein Schwamm oder eine Kugel ist.

5. Verfahren gemäß einem der Ansprüche 1 bis 4, wobei das Verfahren ein Durchführen eines weiteren Lyocell-Verfahrens aufweist (80), das aufweist:
Lösen (68) des Formkörpers (102) in einem Lösungsmittel zur Herstellung einer Spinnmasse; und
Extrudieren (70) und nachfolgendes Ausfällen (72) der Spinnmasse in einem Spinnbad, wodurch ein anderer Formkörper erhalten wird.

6. Verfahren gemäß einem der Ansprüche 1 bis 5, wobei das Verfahren ein Zerkleinern (62), insbesondere ein mechanisches Zerkleinern, weiter insbesondere ein Schreddern, des Ausgangsstoffs (110) vor dem Lösen (68) des Ausgangsstoffs (110) in dem Lösungsmittel (116) aufweist.

7. Verfahren gemäß einem der Ansprüche 1 bis 6, wobei das Verfahren ein Lösen des, insbesondere als Festkörper vorliegenden, Ausgangsstoffs (110) in dem Lösungsmittel (116) ohne chemische Vorbehandlung des Ausgangsstoffs (110), insbesondere ohne chemische Reinigung und/oder ohne Einstellung der Viskosität, aufweist.

8. Verfahren gemäß einem der Ansprüche 1 bis 6, wobei das Verfahren ein zumindest teilweises Reinigen (66), insbesondere ein chemisches Reinigen, des, insbesondere als Festkörper vorliegenden, Ausgangsstoffs (110) vor dem Lösen (68) des Ausgangsstoffs (110) in dem Lösungsmittel (116) aufweist.

9. Verfahren gemäß Anspruch 8, wobei das Reinigen (66) ein zumindest teilweises Entfernen von Farbstoffen, insbesondere mittels Bleichens, aus dem Ausgangsstoff (110) vor dem Lösen (68) des Ausgangsstoffs (110) in dem Lösungsmittel (116) aufweist.

10. Verfahren gemäß einem der Ansprüche 1 bis 6 oder 8 oder 9, wobei der Ausgangsstoff (110) vor seinem Ausfällen (72), insbesondere vor seinem Lösen (68), zumindest teilweise von Fasern des Ausgangsstoffs (110) vernetzenden Vernetzern befreit wird, insbesondere mittels einer alkalischen und/oder einer sauren Vorbehandlung.

11. Verfahren gemäß einem der Ansprüche 1 bis 10, aufweisend zumindest eines der folgenden Merkmale:
wobei der Ausgangsstoff (110) ganz oder teilweise aus Resten aus einer Kleidungsherstellung und/oder aus Altkleidern gebildet ist;
wobei der Ausgangsstoff (110) vor seinem Ausfällen (72), insbesondere vor seinem Lösen (68) in dem Lösungsmittel (116), mit einem anderen Cellulose aufweisenden Ausgangsstoff vermischt (64) wird, wobei insbesondere der andere Ausgangsstoff zumindest ein Material aus einer Gruppe aufweist, die besteht aus Holzzellstoff, Hadernzellstoff, Textilien, Kleidung, Baumwolle und mittels eines Viskoseverfahrens hergestellter Cellulose;
wobei das Verfahren ein Nachbearbeiten (74) des ausgefällten Formkörpers (110) aufweist;
wobei das Lösen (68) des Ausgangsstoffs (110) und/oder das Lösen (52) der Cellulosequelle (48) mittels eines Direktlöseverfahrens und/oder mittels tertiärer Aminoxide, insbesondere N-Methylmorpholin-N-oxid, und/oder mittels ionischer Flüssigkeiten als Lösungsmittel (116) erfolgt;
wobei das Lösen (68) des Ausgangsstoffs (110) und das nachfolgende Ausfällen (72) des Formkörpers (102) mittels eines Lyocell-Verfahrens durchgeführt wird.

12. Verfahren gemäß einem der Ansprüche 1 bis 11, wobei das Verfahren ein Herstellen des Cellulose aufweisenden Ausgangsstoffs (110) aufweist mittels:
Lösen (52) der Cellulosequelle (48) in dem Lösungsmittel zur Herstellung der Spinnmasse; und
Extrudieren (54) und nachfolgendes Ausfällen (56) der Spinnmasse in dem Spinnbad.

13. Verfahren gemäß einem der Ansprüche 1 bis 12, wobei Fasern (200) des Ausgangsstoffs (110) oder der Formkörper (102) eine glatte runde Außenfläche (202) aufweisen.

14. Verwendung eines mittels eines ersten Lyocell-Verfahrens hergestellten Cellulose aufweisenden Ausgangsstoffs (110) zum Herstellen eines Cellulose aufweisenden Formkörpers (102) mittels Behandelns des Ausgangsstoffs (110) mittels eines zweiten Lyocell-Verfahrens.

15. Verwendung gemäß Anspruch 14, wobei als zumindest ein Teil des Ausgangsstoffs (110) Textilien, insbesondere Reste aus einer Kleidungsherstellung und/oder Altkleider, verwendet werden.

## Claims

1. Method for manufacturing a cellulose-regenerate-molded body (102), wherein the method comprises:
supplying (78) a cellulose comprising starting material (110) which is manufactured by a lyocell-method, which is manufactured by solving (25) a cellulose source (48) in a solvent for manufacturing a spinning mass, by extruding (54) the spinning mass, and by subsequently precipitating (56) in a spinning bath;
solving (68) the cellulose comprising starting material (110) in a solvent (116) for manufacturing a spinning mass, wherein solving (68) the starting material (110) is performed by a direct solving method; and
extruding (70) and subsequently precipitating (72) the spinning mass in a spinning bath (191), wherein thereby the molded body (102) is obtained.

2. Method according to claim 1, wherein the spinning bath (191) for the solved cellulose comprising starting material (110) comprises water and solvent.

3. Method according to claim 1 or 2, wherein the spinning bath for the solved cellulose source (48) comprises water and solvent.

4. Method according to one of the claims 1 to 3, wherein the molded body (102) is a filament, a fiber, in particular an endless fiber, a foil, a sponge, or a sphere.

5. Method according to one of the claims 1 to 4, wherein the method comprises performing a further lyocell-method (80) which comprises:
solving (68) the molded body (102) in a solvent for manufacturing a spinning mass; and
extruding (70) and subsequently precipitating (72) the spinning mass in a spinning bath, wherein thereby another molded body is obtained.

6. Method according to one of the claims 1 to 5, wherein the method comprises comminuting (62), in particular mechanically comminuting, further in particular shredding, the starting material (110) prior to solving (68) the starting material (110) in the solvent (116).

7. Method according to one of the claims 1 to 6, wherein the method comprises solving the starting material (110), which is in particular present as a solid body, in the solvent (116) without chemical pretreatment of the starting material (110), in particular without a chemical cleaning and/or without an adjustment of the viscosity.

8. Method according to one of the claims 1 to 6, wherein the method comprises at least partially cleaning (66), in particular chemically cleaning, the starting material (110), which is in particular present as a solid body, prior to solving (68) the starting material (110) in the solvent (116).

9. Method according to claim 8, wherein cleaning (66) comprises at least partially removing colorants, in particular by bleaching, from the starting material (110) prior to solving (68) the starting material (110) in the solvent (116).

10. Method according to one of the claims 1 to 6 or 8 or 9, wherein the starting material (110), prior to its precipitating (72), in particular prior to its solving (68), is at least partially freed from cross-linkers which cross-link the fibers of the starting material (110), in particular by an alkaline and/or an acidic pretreatment.

11. Method according to one of the claims 1 to 10, comprising at least one of the following features:
wherein the starting material (110) is entirely or partially formed by residues of a clothing manufacture and/or by old clothes;
wherein the starting material (110), prior to its precipitating (72), in particular prior to its solving (68) in the solvent (116), is mixed (64) with another cellulose comprising starting material, wherein in particular the other starting material comprises at least one material of a group which is consisting of wood pulp, rags pulp, textiles, clothing, cotton, and cellulose which is manufactured by a viscose-method;
wherein the method comprises postprocessing (74) the precipitated molded body (110);
wherein solving (68) the starting material (110) and/or solving (52) the cellulose source (48) is performed by a direct solving method and/or by tertiary amine oxides, in particular N-methylmorpholine-N-oxide, and/or by ionic liquids as solvent (116);
wherein solving (68) the starting material (110) and subsequently precipitating (72) the molded body (102) is performed by a lyocell-method.

12. Method according to one of the claims 1 to 11, wherein the method comprises manufacturing a cellulose comprising starting material (110) by:
solving (52) the cellulose source (48) in the solvent for manufacturing the spinning mass; and
extruding (54) and subsequently precipitating (56) the spinning mass in the spinning bath.

13. Method according to one of the claims 1 to 12, wherein fibers (200) of the starting material (110) or the molded body (102) comprise a smooth round outer surface (202).

14. Use of a cellulose comprising starting material (110) which is manufactured by a first lyocell-method for manufacturing a cellulose comprising molded body (102) by treating the starting material (110) by a second lyocell-method.

15. Use according to claim 14, wherein as at least a part of the starting material (110), textiles, in particular residues of a clothing manufacture and/or old clothes, are used.

## Revendications

1. Procédé de fabrication d'un corps moulé en cellulose régénérée (102), dans lequel le procédé présente :
l'amenée (78) d'une substance de départ (110) présentant de la cellulose fabriquée au moyen d'un procédé lyocell, qui est fabriquée par dissolution (52) d'une source de cellulose (48) dans un solvant pour fabriquer une matière filable, par extrusion (54) de la matière filable puis par précipitation (56) dans un bain de filage ;
la dissolution (68) de la substance de départ (110) présentant de la cellulose dans un solvant (116) pour fabriquer une matière filable, dans lequel la dissolution (68) de la substance de départ (110) est effectuée par un procédé de dissolution directe ; et
l'extrusion (70) puis la précipitation (72) de la matière filable dans un bain de filage (191) ce qui permet d'obtenir le corps moulé (102).

2. Procédé selon la revendication 1, dans lequel le bain de filage (191) pour la substance de départ (110) dissoute présentant de la cellulose présente de l'eau et du solvant.

3. Procédé selon la revendication 1 ou 2, dans lequel le bain de filage pour la source de cellulose (48) dissoute présente de l'eau et du solvant.

4. Procédé selon l'une quelconque des revendications 1 à 3, dans lequel le corps moulé (102) est un filament, une fibre, en particulier une fibre continue, un film, une éponge ou une bille.

5. Procédé selon l'une quelconque des revendications 1 à 4, dans lequel le procédé présente une mise en œuvre d'un autre procédé lyocell (80), qui présente :
la dissolution (68) du corps moulé (102) dans un solvant pour fabriquer une matière filable ; et
l'extrusion (70) puis la précipitation (72) de la matière filable dans un bain de filage ce qui permet d'obtenir un autre corps moulé.

6. Procédé selon l'une quelconque des revendications 1 à 5, dans lequel le procédé présente un broyage (62), en particulier un broyage mécanique, par ailleurs en particulier un déchiquetage, de la substance de départ (110) avant la dissolution (68) de la substance de départ (110) dans le solvant (116).

7. Procédé selon l'une quelconque des revendications 1 à 6, dans lequel le procédé présente une dissolution de la substance de départ (110), présente en particulier sous la forme d'un corps solide, dans le solvant (116) sans prétraitement chimique de la substance de départ (110), en particulier sans nettoyage chimique et/ou sans ajustement de la viscosité.

8. Procédé selon l'une quelconque des revendications 1 à 6, dans lequel le procédé présente un nettoyage (66) au moins partiel, en particulier un nettoyage chimique, de la substance de départ (110), présente en particulier sous la forme d'un corps solide, avant la dissolution (68) de la substance de départ (110) dans le solvant (116).

9. Procédé selon la revendication 8, dans lequel le nettoyage (66) présente une élimination au moins partielle de colorants, en particulier par blanchiment, de la substance de départ (110) avant la dissolution (68) de la substance de départ (110) dans le solvant (116).

10. Procédé selon l'une quelconque des revendications 1 à 6 ou 8 ou 9, dans lequel la substance de départ (110) est dépourvue avant sa précipitation (72), en particulier avant sa dissolution (68), au moins en partie d'agents de réticulation réticulant des fibres de la substance de départ (110), en particulier par un prétraitement alcalin et/ou acide.

11. Procédé selon l'une quelconque des revendications 1 à 10, présentant au moins une des caractéristiques suivantes :
dans lequel la substance de départ (110) est formée en totalité ou en partie de résidus issus d'une fabrication de vêtement et/ou issus de vieux vêtements ;
dans lequel la substance de départ (110) est mélangée (64) avant sa précipitation (72), en particulier avant sa dissolution (68) dans le solvant (116), avec une autre substance de départ présentant de la cellulose, dans lequel en particulier l'autre substance de départ présente au moins un matériau issu d'un groupe qui est constitué de pâte de bois, de pâte à papier chiffon, de textiles, de vêtements, de coton, et de cellulose fabriquée par un procédé à la viscose ;
dans lequel le procédé présente un traitement ultérieur (74) du corps moulé (110) précipité ;
dans lequel la dissolution (68) de la substance de départ (110) et/ou la dissolution (52) de la source de cellulose (48) sont effectuées par un procédé de dissolution directe et/ou par des oxydes d'amine tertiaires, en particulier du N-méthylmorpholine-N-oxyde, et/ou au moyen de liquides ioniques en tant que solvants (116) ;
dans lequel la dissolution (68) de la substance de départ (110) puis la précipitation (72) du corps moulé (102) sont mises en œuvre par un procédé lyocell.

12. Procédé selon l'une quelconque des revendications 1 à 11, dans lequel le procédé présente une fabrication de la substance de départ (110) présentant de la cellulose par :
dissolution (52) de la source de cellulose (48) dans le solvant pour fabriquer la matière filable ; et
l'extrusion (54) puis la précipitation (56) de la matière filable dans le bain de filage.

13. Procédé selon l'une quelconque des revendications 1 à 12, dans lequel des fibres (200) de la substance de départ (110) ou le corps moulé (102) présentent une surface extérieure (202) lisse ronde.

14. Utilisation d'une substance de départ (110) présentant de la cellulose fabriquée par un premier procédé lyocell pour fabriquer un corps moulé (102) présentant de la cellulose par traitement de la substance de départ (110) au moyen d'un deuxième procédé lyocell.

15. Utilisation selon la revendication 14, dans laquelle des textiles, en particulier des résidus issus d'une fabrication de vêtement et/ou issus de vieux vêtements, sont utilisés en tant qu'au moins une partie de la substance de départ (110).
